# EUROPEAN PATENT APPLICATION

(11) **EP 1 528 472 A1**
(43) Date of publication of application: **04.05.2005**
(21) Application number: 03766697.1
(22) Date of filing: 01.08.2003
(51) Int. Cl.: G06F 12/00, G06F 13/00

(54) **FILE MANAGEMENT METHOD, SYSTEM AND PROGRAM**

(30) Priority: 05.08.2002 JP 2002226800
(71) Applicant: PFU LIMITED, Kahoku-gun Ishikawa 929-1192 (JP)
(72) Inventor: ISHIKAWA, Shoichi, c/o Pfu Limited, Ishikawa 929-1192 (JP); KANEMITSU, Norio, c/o Pfu Limited, Ishikawa 929-1192 (JP); SASAKAWA, Katsushi, c/o Pfu Systems, Inc., Santa Clara, CA 95051-3501 (US); SHIDA, Jun, c/o Pfu Systems, Inc., Santa Clara, CA 95051-3501 (US)
(74) Representative: Reichel, Wolfgang, Dipl.-Ing.
(86) International application number: PCT/JP2003/009805
(87) International publication number: WO 2004/013756

(57) **Abstract**

The present invention enables automatic creation of filing folders, without requiring a user to create filing folders, before an operation of reading documents by use of a scanner and filing them. A folder configuration including folders for storing receipt data is created on mail software. A folder configuration analysis section obtains and analyzes the folder configuration (or data management configuration) of the mail software. A folder configuration comparison/creation section creates in a file system a folder configuration identical to the analyzed folder configuration, and performs file management. With this configuration, a user can execute filing processing for the folder configuration which is identical to the folder configuration on the mail software, which the user is accustomed to using. Therefore, the user can store files in proper folders without confusion.

## Description

### TECHNICAL FIELD

The present invention relates to a file management method, a file management system, and a file management program which are suitable for filing operation in which a PC is connected to, for example, an image scanner, and the PC causes file management software to read documents by use of the scanner and file them.

### BACKGROUND ART

When paper information (documents), in particular, those of individuals, are read by use of a scanner during the course of office work, classifying work is inevitably involved. When no folders are provided for filing, filing cannot be performed properly, and in the worst case, filing itself may be abandoned.

In a conventional scheme for storing images by use of filing (file management) software, a user creates predetermined folders by him/herself, and properly stores images in the folders. Therefore, users encounter a problem of having to newly create file folders, and the labor and difficulty involved in creating file folders hinder popularization of filing software.

Many users who perform filing simultaneously store the same data into an internal storage unit of a PC and an external storage unit such as an MO unit for the purpose of data protection. However, since these two storing operations have been performed separately, the storing operation doubles in scale.

### DISCLOSURE OF THE INVENTION

In view of the foregoing, an object of the present invention is to solve the above-described problem and enable automatic creation of filing folders, without requiring a user to create filing folders, before an operation of reading paper information (documents) by use of a scanner and filing them.

Another object of the present invention is to secure protection of data during filing, without requiring a user to separately perform storing operations for a plurality of storage units, which would otherwise cause a doubling of the scale of the storing operation.

The file management method, system, and program of the present invention are suitable for filing operation in which a PC is connected to, for example, an image scanner, and the PC causes file management software to read documents by use of the scanner and file them. However, the present invention is not limited to management of documents read by use of a scanner, and can be applied to management of documents of any type. The image scanner may have a LAN connection function, and when it is connected to a LAN connection device, the scanner can read documents in order to store them in a server on a LAN.

A file management system comprises a folder configuration analysis section for analyzing a folder configuration created on mail software in order to obtain information regarding the folder configuration; and a folder configuration creation section for creating the same folder configuration in a file system on the basis of the information obtained by the folder configuration analysis section. File management is executed by executing filling processing for the folder configuration created by means of the folder configuration creation section.

### BRIEF DESCRIPTION OF DRAWINGS

FIG. 1 is a schematic diagram illustrating a file management system of the present invention.
FIG. 2 is a second schematic diagram illustrating the file management system of the present invention.
FIG. 3 is a third schematic diagram illustrating the file management system of the present invention.

### BEST MODE FOR CARRYING OUT THE INVENTION

Recently, electronic mail has come into very widespread use, and folders for storing data of received electronic mail are created in each PC. A user of a PC his/herself creates folders to store data in a manner convenient for the user. For example, folders are created in the following patterns.
1) Folders are created on the basis of date and time of receipt, or the order of receipt.
2) A folder is created for each event, such as a meeting or business trip.
3) A folder is created for each recipient (or sender).
4) Folders are created in a combination of 1) to 3) above.

Each user creates such a folder configuration in a manner that is convenient for the user. When paper information (documents) are read by use of, for example, a scanner and are filed, the present invention utilizes the above-described folders created on a PC and used to store receipt data of electronic mail. Therefore, a user does not need to create filing folders by his/herself. Newly creating folders at the time of introduction of filing software constitutes great labor for the user. In contrast, copying the file folder configuration for receipt data of electronic mail eliminates such labor and is rational. Such folders are created on a storage unit(s). When data are to be stored, it is important to designate two or more storage units so as to enhance the safety of stored data. The present invention enables such storage operation through a single operation.

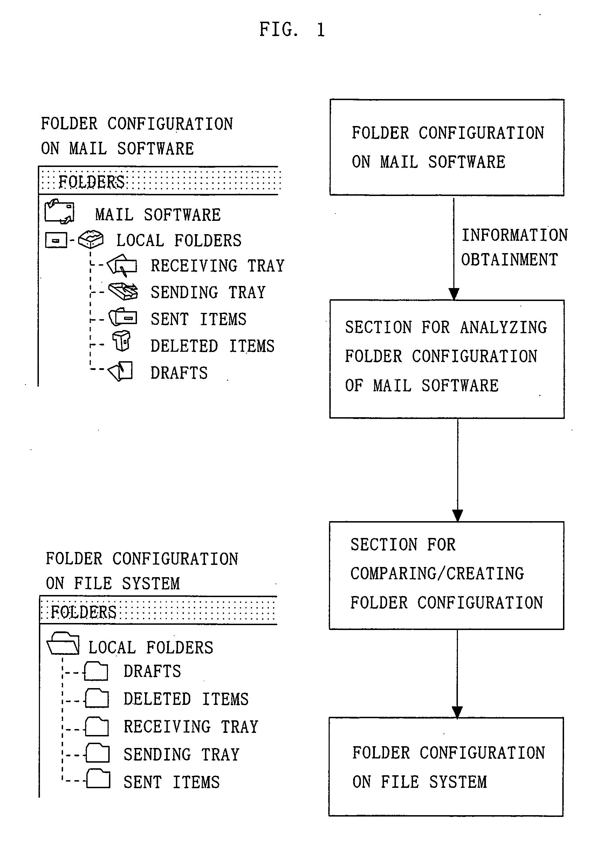

FIG. 1 is a schematic diagram illustrating a file management system of the present invention. A folder configuration including folders for storing receipt data is created on mail software. When file management software is installed, a folder configuration analysis section for analyzing the folder configuration of the mail software obtains and analyzes information regarding the folder configuration; that is, the data management configuration, of the mail software. A folder configuration comparison/creation section creates in the file system a folder configuration that is identical with the analyzed folder configuration, and performs file management.

Moreover, the folder configuration comparison/creation section may have the following check and update function. That is, the folder configuration comparison/creation section checks the folder configuration of the electronic mail software at the time of startup of the file management software, regularly, and/or upon user's request. When the folder configuration of the electronic mail software differs from that of the file system, the folder configuration comparison/creation section updates the folder configuration of the file system so as to make it match that of the electronic mail software.

By virtue of the above operation, the user can execute filing processing for a folder configuration which is identical with the folder configuration on the mail software, which the user is accustomed to using. Therefore, the user can store files in proper folders without confusion. Moreover, since management of these folders is performed at the time of installation of the software, regularly, and/or upon the user's request, the user is freed from the work of maintaining the folder configuration.

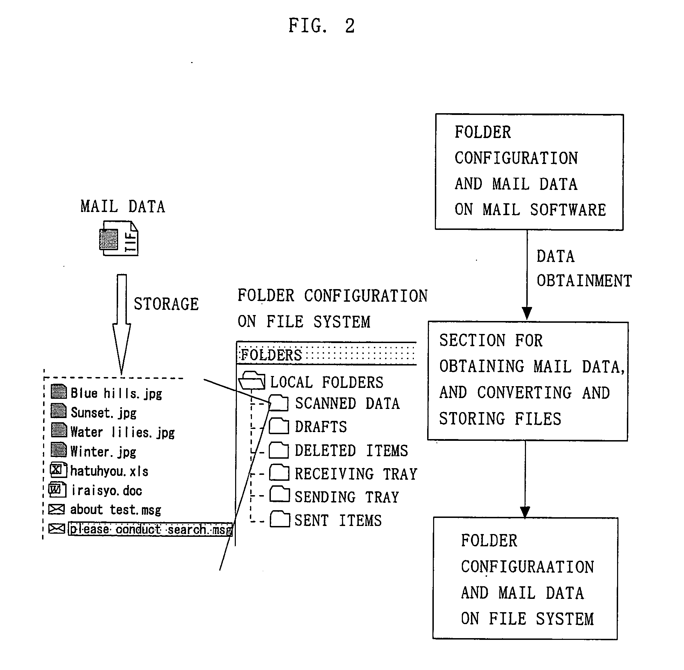

FIG. 2 is a second schematic diagram illustrating the file management system of the present invention. Similar to the above-described example, a mail-data obtainment & file conversion/storage section obtains the data management configuration (folder configuration) of the electronic mail software, and creates in the file system a folder configuration identical with the obtained folder configuration. In addition, the mail-data obtainment & file conversion/storage section obtains pieces of mail data stored in the mail software, and stores the mail data in the corresponding folders created in the file system. This enables mail data and other files to be managed in the file system under the same environment.

Since all files (including mail data) can be managed in the file system (e.g., Explorer), data are not required to be doubly stored in the file system and the mail software as has been the case in the past. Moreover, since all data are managed in the file system, a seamless environment can be realized more easily; for example, functions peculiar to the file system can be applied to mail data.

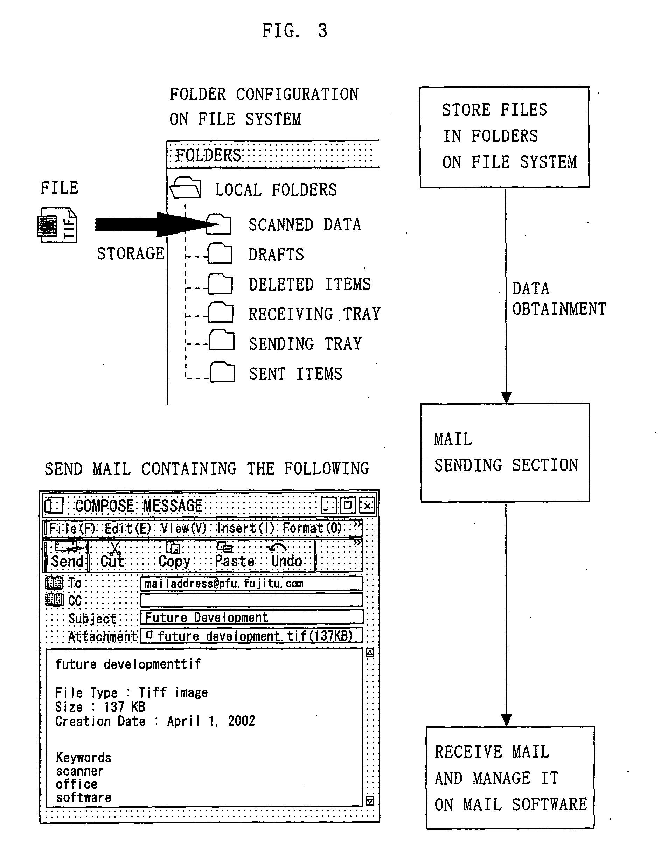

FIG. 3 is a third schematic diagram illustrating the file management system of the present invention. This file management system is configured in such a manner that when a file is stored in a folder in the file system, a mail including information regarding a link to the file, detailed information of the file, and the file itself is transmitted to a mail address of the user, which enables the user to manage the file on the mail software.

Since all files can be managed on the mail software, data are not required to be doubly stored in the file system (Explorer) and the mail software, as has been the case in the past. Moreover, since this method can be used with any mail software, the user can use mail software which the user has used until now, whereby switching of environments can be performed smoothly.

Moreover, the data management configuration of the electronic mail software can be created on two or more storage units. This enables the user to select a plurality of locations (e.g., an internal storage unit and an external storage unit) as destinations where electronic mail is stored (held). Through provision of the function of selecting a plurality of locations at the time of designation of storage destination of electronic mail, setting a plurality of storage locations and automatic backup are enabled.

Moreover, image data read by use of a scanner can be simultaneously stored in a plurality of storage locations. The thus-read image data can be automatically backed up through designation of a plurality of storage destinations for filing.

Further, the image scanner may have a LAN connection function, and when it is connected to a LAN connection device, the scanner can read documents in order to file them in a server on a LAN.

### INDUSTRIAL APPLICABILITY

The present invention enables automatic creation of filing folders, without requiring a user to create filing folders, before an operation of reading paper information (documents) by use of a scanner and filing them.

Moreover, protection of data during filing can be secured, without requiring a user to separately perform storing operations for a plurality of storage units, which would otherwise cause a doubling of the scale of the storing operation.

## Claims

1. A file management method for reading and filing documents by use of file management software, comprising the steps of:
analyzing a folder configuration created on mail software in order to obtain information regarding the folder configuration;
creating the same folder configuration in a file system on the basis of the obtained information; and
performing file management by executing filing processing for the created folder configuration.

2. A file management method according to claim 1,
wherein the analysis of the folder configuration is performed at the time of startup of the file management software, regularly, or upon user's requests; and
when the folder configuration of the mail software differs from that of the file system, the folder configuration of the file system is updated to match that of the mail software.

3. A file management method according to claim 1,
wherein mail data items are obtained from the mail software and are stored in corresponding folders created in the file system; and mail data and other files are managed in the file system under the same environment.

4. A file management method according to claim 1,
wherein when a file is stored in a folder in the file system, a mail including information regarding a link to the file, detailed information of the file, and the file itself is transmitted to a mail address of a user, whereby the file is managed on the mail software.

5. A file management method according to claim 1,
wherein the folder configuration of the electronic mail software is created on two or more storage units.

6. A file management method according to claim 5,
wherein image data read by use of a scanner are simultaneously stored in the two or more storage units.

7. A file management system for reading and filing documents by use of file management software, comprising:
a folder configuration analysis section for analyzing a folder configuration created on mail software in order to obtain information regarding the folder configuration; and
a folder configuration creation section for creating the same folder configuration in a file system on the basis of the information obtained by the folder configuration analysis section,
wherein file management is performed by executing filing processing for the file folder configuration created by the folder configuration creation section.

8. A file management program for reading and filing documents by use of file management software, the program executing the steps of:
analyzing a folder configuration created on mail software in order to obtain information regarding the folder configuration;
creating the same folder configuration in a file system on the basis of the obtained information; and
performing file management by executing filing processing for the created folder configuration.
